Europäisches Patentamt

European Patent Office

Office européen des brevets

(11) Numéro de publication: **0 006 071**
**B1**

# FASCICULE DE BREVET EUROPEEN

(45) Date de publication du fascicule de brevet:
14.04.82

(51) Int. Cl.³: **B 23 P 1/12**, B 21 C 25/10

(21) Numéro de dépôt: 79420025.3

(22) Date de dépôt: 29.05.79

(54) Procédé d'usinage par électro-érosion et son application à la fabrication de filières d'extrusion des métaux.

(30) Priorité: 01.06.78  FR 7817224

(43) Date de publication de la demande:
12.12.79 Bulletin 79/25

(45) Mention de la délivrance du brevet:
14.04.82 Bulletin 82/15

(84) Etats contractants désignés:
AT DE GB NL SE

(56) Documents cités:
FR–A–1 210 305
FR–A–2 350 165

(73) Titulaire: **CEGEDUR SOCIETE DE TRANSFORMATION DE L'ALUMINIUM PECHINEY, 66, Avenue Marceau, F-75361 Paris Cédex 08 (FR)**

(72) Inventeur: **Izari, Gérard, rue Albert Camus, F-49460 Montreuil Juigné (FR)**

(74) Mandataire: **Pascaud, Claude et al, PECHINEY UGINE KUHLMANN 28, rue de Bonnel, F-69433 Lyon Cedex 3 (FR)**

ACTORUM AG.

# Procédé d'usinage par électro-érosion et son application à la fabrication de filières d'extrusion des métaux

La présente invention concerne un procédé d'usinage par électro-érosion d'une pièce comportant un orifice cylindrique de section quelconque, et son application à la fabrication de filière d'extrusion des métaux.

L'usinage par électro-érosion (ou étincelage) consiste à produire au travers d'un liquide diélectrique, par exemple un hydrocarbure, des étincelles entre une électrode conductrice de forme complémentaire à l'enlèvement de matière à obtenir sur l'ébauche à usiner.

On sait que les surfaces obtenues par étincelage présentent une cartaine rugosité, d'autant plus élevée que le régime de travail (ou d'enlèvement de matière) est lui-même plus élevé, donc l'usinage plus rapide; et que, d'autre part, l'électrode utilisée s'use plus ou moins selon le régime choisi, l'usure ayant tendance à être plus importante lorsqu'on cherche à obtenir des rugosités plus faibles.

Lorsqu'on usine une empreinte par électro-érosion, il n'est pas possible d'obtenir directement une faible rugosité de la surface étincelée du fait que les faibles régimes nécessaires conduiraient à des débits d'enlèvement de matière trop petites, donc à des temps d'usinage excessivement longs. Il n'est pas possible, d'autre part, d'obtenir directement la forme correspondante à cause de l'usure de l'électrode au cours du travail, mais aussi à cause des problèmes de circulation du diélectrique (parfois circulation quasi inexistante, ou le plus souvent, en sens contraire de la pénétration de l'électrode pour les régimes moyens ou rapides) tous ces éléments ayant tendance à évaser l'empreinte réalisée. Ainsi, une électrode cylindrique conduit généralement à une empreinte conique. On est donc amené à utiliser successivement plusieurs électrodes, souvent trois, pour l'ébauchage, la semi-finition et la finition, les deux dernières diminuant progressivement la rugosité et la conicité de l'empreinte grâce à l'utilisation de régimes de plus en plus faibles. Le sous-dimensionnement des électrodes utilisées successivement, par rapport à l'empreinte finale à obtenir, est de plus en plus petit de manière à tenir compte de ce qu'on appelle en électro-érosion la différence entre les lignes de passe ou de passage, et qui résulte de la quantité minimum de matière à enlever par une passe faite à un régime donné pour effacer totalement (en la remplaçant par une plus faible) la rugosité obtenue à la passe précédente de régime plus élevé, et des distances de travail entre électrode et pièce pour chacun des deux régimes différents considérés. On peut également, dans le même but, utiliser pour une même empreinte, de préférence débouchante, une électrode longue et étagée présentant les différents sous-dimensionnements correspondant aux différents régimes et lignes de passe choisis pour l'ébauchage, la semi-finition et la finition. Lorsque l'électrode a une forme compliquée et qu'on ne peut accepter le risque de difficultés de réalisation et de réglage ainsi qu'un coût élevé, une autre solution doit être recherchée. La pratique courante de l'homme de l'art consiste alors, quand c'est possible, à opérer un compromis pour ne faire qu'une passe d'étincelage assez rapide pour obtenir un débit acceptable, mais en évitant d'avoir une géométrie et une rugosité trop grossières.

De toute manière, avec ce compromis, la géométrie et la rugosité obtenues restent insuffisantes ce qui consiste, par exemple pour les filières d'extrusion, une finition à la lime longue et délicate, d'autant plus qu'elle se situe après les traitements thermiques qui interviennent après l'étincelage pour en atténuer l'effet durcissant, ces traitements thermiques provoquant inévitablement des déformations.

Cependant, différents autres systèmes ont été mis au point pour apporter une meilleure solution à certains problèmes rencontrés dans le déroulement de l'étincelage, et, en particulier, pour faire plusieurs passes avec la même électrode, celle-ci ayant sensiblement la forme de l'orifice à étinceler. Il s'agit de systèmes permettant de communiquer à l'électrode (ou à la pièce devant recevoir l'empreinte) un mouvement continu de translation circulaire latérale de rayon r, réglable de 0 à une certaine valeur pour tenir compte des différentes lignes de passes ou tout autre déplacement latéral contrôlé et réglable, cette faculté de réglage pouvant être utilisée à diverses fins (amélioration des conditions d'usinage par un meilleur lavage de l'espace électrode-pièce et amélioration de la réponse aux courts circuits par exemple) et, en particulier, à certaines étapes de l'avancement du travail d'étincelage pour remplacer l'action des différentes électrodes successives, les possibilités offertes par ces systèmes pouvant être mises en œuvre selon différentes méthodes.

Il est rappelé qu'un mouvement de translation circulaire (ou orbital) est un mouvement plan dans lequel tous les points décrivent simultanément une circonférence de rayon r, un vecteur quelconque lié au mobile restant parallèle à lui-même.

Une première méthode consiste à exécuter d'une façon complètement séparée dans le temps, les opérations de descente (en premier) et de translation circulaire continue (en second). Lorsque l'électrode est en place dans l'empreinte qu'elle a préalablement réalisée, le mouvement de descente de la broche de la machine est bloqué de façon à pouvoir étinceler en utilisant uniquement le mouvement continu de translation circulaire. Ce mouvement se fait avec une variation progressive du rayon r du cercle de translation qui, partant de zéro, est augmenté par incréments de l'ordre de 0,01 mm en suivant à vue l'avancement du travail selon l'état des paramètres tension et intensité du courant d'étincelage, jusqu'à atteindre une valeur préalablement déterminée en fonction des régimes et lignes de passe choisis, et ceci, en une ou plusieurs étapes selon le nombre de régimes retenus pour atteindre l'état de finition désiré. Cette augmentation se fait par un moyen quelconque (électrique ou autre), mais à partir d'une commande manuelle indépendante qui peut être à impulsions, et ne pourrait s'automatiser qu'au prix d'un appareil de régulation complexe. En effet, il est nécessaire dans toute opération d'électro-érosion que la distance électrode-pièce soit réglée en permanence avec précision et ceci d'autant plus qu'on s'approche des régimes de finition. Si la distance est trop grande, l'étincelage n'a pas lieu et, si elle est trop courte, il se produit un court-circuit entre l'électrode et la pièce et on est obligé d'arrêter l'opération pour nettoyer les surfaces.

Ainsi, en l'absence d'un système de régulation – qui existerait s'il n'y avait qu'une simple descente – le travail mobilise en permanence un opérateur, est très délicat à conduire et n'a qu'un débit moyen très faible par rapport aux débits moyens d'enlèvement de matière normalement obtenus en travail classique en descente, et ceci plus particulièrement dans les régimes de semi-finition ou de finition.

Un autre inconvénient est que, dans la phase de translation circulaire, l'électrode a un niveau fixe et qu'elle transmet donc sa forme latérale propre, usure comprise, à la paroi érodée.

Une seconde méthode consiste à étinceler en exécutant les deux opérations de descente et de translation circulaire continue simultanément, la valeur de r étant constante pendant toute la descente et préalablement réglée en fonction des régimes et des lignes de passe choisis, l'opération pouvant être répétée plusieurs fois avec des valeurs de r de plus en plus élevées selon le nombre de régimes et de passages retenus pour atteindre l'état de finition désiré. Cette méthode pose un certain nombre de problèmes difficiles, qui ne peuvent être résolus qu'avec l'aide d'un système complexe d'asservissement intégré à l'ensemble. En effet, l'empreinte à obtenir étant le plus souvent de forme quelconque et non circulaire, la quantité de métal à enlever n'est pas répartie uniformément dans chacun des secteurs élémentaires balayés par le mouvement de translation circulaire (de l'électrode ou de la pièce à usiner), si bien que la descente ne peut s'effectuer à la même vitesse en tous les points de la trajectoire de ce mouvement. De ce fait, la profondeur à laquelle doit travailler l'électrode varie constamment le long de la trajectoire de translation circulaire, et comme la distance électrode-pièce doit être réglée avec précision, le système de régulation en descente de cette distance, existant normalement sur toute machine d'étincelage, recherche en permanence la valeur idéale, mais ne la trouve que très rarement. Dans ces conditions, en raison des courts-circuits possibles ou des distances électrodes-pièces anormalement élevées, les temps morts sont importants et la vitesse moyenne d'étincelage est limitée à quelques unités en pourcentage de sa valeur normale. D'autre part, l'érosion de l'empreinte est souvent incomplète. En effet, au fur et à mesure de l'avancement de l'opération, les écarts de profondeur de travail de l'électrode ont tendance à s'accroître et, quand la zone étincelée le plus rapidement est terminée, l'électrode débouche dans le vide à cet endroit. La régulation de la descente de l'électrode fait que la vitesse de descente augmente jusqu'à la fin de course, ce qui arrête l'opération. Le mouvement de translation circulaire étant relativement lent, l'électrode et les secteurs du cercle de translation où le travail étant en retard, n'ont pas le temps de se trouver en concordance pour empêcher cet arrêt. En résumé, on peut dire, schématiquement, que l'électrode passe par le premier trou qu'elle rencontre sur la trajectoire circulaire et laisse son travail inachevé. L'inconvénient ci-dessus, exposé dans le cas d'une empreinte débouchante, se présenterait à peu près dans les mêmes conditions pour une empreinte borgne.

Les différents inconvénients mentionnés dans cette deuxième méthode, encore plus particulièrement sensibles dans les empreintes à faces latérales parallèles, ou faiblement coniques, sont en principe évités en ayant recours, ainsi que cela est indiqué plus haut, à un ensemble générateur d'étincelage, appareil de commande de la translation circulaire, et dispositif de régulation de la vitesse de descente de l'électrode, disposant du système de régulation nécessaire pour communiquer à chaque point de l'électrode, une trajectoire inscrite sur la surface d'un cône à axe vertical et asservie aux conditions d'usinage, r i, le rayon de giration instantané de chaque point de l'électrode n'étant donc pas parfaitement constant mais régulé, la valeur R du rayon de la base du cône étant choisie selon les besoins de la gamme d'usinage (régimes et lignes de passe) et fixe pendant toute la descente, la vitesse de rotation autour de l'axe du cône étant asservie à la quantité de matière à enlever sur la trajectoire effectuée.

Ce système compliqué et coûteux ne peut pas s'adapter facilement sur des machines classiques, et nécessite donc l'achat de machines nouvelles dans lesquelles le dispositif de translation circulaire et ses relations avec les autres fonctions de l'ensemble sont conçus d'une façon intégrée au départ.

Le procédé selon l'invention permet de remédier aux différents inconvénients mentionnés. Il utilise une seule électrode dont la section droite est voisine du profil à usiner, mais de dimensions légèrement inférieures, pour l'ensemble de l'opération d'usinage. Il peut être mis en œuvre avec une tête d'alésage ou de translation circulaire (pour donner le mouvement voulu à l'électrode), ou avec un plateau porte-pièce à mouvement orbital (pour donner le mouvement voulu à la pièce à étinceler), ces différents matériaux existant sur le marché, ou tout autre système permettant de communiquer un déplacement latéral contrôlé à l'électrode ou à la pièce à usiner. Ce procédé est donc adaptable aux machines classiques d'électro-érosion, sous réserve de contraintes dimensionnelles pouvant éventuellement se présenter pour les plus petites, car il utilise uniquement la régulation de la distance électrode-pièce en descente qui existe normalement sur toutes ces machines. Il est, de ce fait, très facilement automatisable.

On peut obtenir une très bonne précision dans la géométrie désirée, même avec une électrode ayant déjà servi, à condition que son usure soit régulière, ainsi qu'une excellente perpendicularité de l'ouverture par rapport au plan de base de la pièce. La rugosité obtenue est très faible et peut disparaître avec un polissage classique léger et d'exécution rapide, ou avec un polissage sur machine à la pâte abrasive encore plus rapide. De ce fait, puisqu'aucune reprise importante n'est nécessaire, il est possible de faire l'usinage sur des pièces traitées thermiquement, ce qui évite d'être tributaire des déformations de trempe et des risques éventuels de décarburation superficielle.

Par ailleurs, ce procédé comporte d'autres avantages sur le plan général, mais qui peuvent s'appliquer plus particulièrement aux filières d'extrusion des métaux.

D'une part, pour les filières multiécoulements, la dispersion obtenue dans la géométrie des divers écoulements est très faible. D'autre part, pour les filières de profilés tubulaires, il est possible de réaliser complètement l'assemblage précis de la filière et de la nourrice (ou pont) après les traitements thermiques, dans le but d'effectuer ensuite l'étincelage de l'ensemble monté, alors que cela n'est pas le cas si les traitements thermiques sont pratiqués après l'étincelage, car le montage effectué auparavant, quel qu'il soit, perd alors toute sa précision. Enfin, il est possible, avec la même électrode, de faire aussi l'étincelage de la dépouille de la filière.

Le procédé selon l'invention consiste à réaliser une première passe d'ébauche rapide par simple descente de l'électrode parallèlement aux génératrices de l'orifice, puis à remonter l'électrode au-dessus de la pièce, à faire une translation de l'électrode perpendiculairement aux génératrices d'une distance r de sorte qu'un point P du bord de l'électrode arrive en $P_1$ sur le profil à usiner, à faire descendre l'électrode dans cette position dans l'orifice ébauché, à la remonter hors de la pièce, à faire une translation circulaire de l'électrode, de telle sorte que $P_1$ décrive un arc de cercle de centre P et de rayon r jusqu'en $P_2$, à faire descendre l'électrode puis à la remonter hors de la pièce et à répéter l'opération n fois jusqu'à ce que la translation circulaire ait fait un tour complet. La valeur de r est en général limitée supérieurement par le plus petit rayon de courbure du profil de l'orifice à usiner; celle-ci est, en pratique, généralement comprise entre 2 et 0,01 mm; la valeur la plus courante est de quelques dizièmes de mm.

Selon un mode de réalisation particulier de l'invention, on réalise n passes de semi-finition avec une translation circulaire de rayon r et n' passes de finition avec une translation circulaire de rayon r' tel que r' soit légèrement supérieur à r. Il est avantageux, dans ce cas, de faire descendre l'électrode dans l'orifice plus profondément dans les passes de semi-finition que dans la passe d'ébauche et plus profondément, également, dans les passes de finition que dans les passes de semi-finition, en la faisant même sortir complètement sous l'orifice usiné à chaque fois que cela est possible, afin de garantir le parallélisme des faces étincelées. Dans les passes de finition, on fait circuler, de préférence, le liquide diélectrique par aspiration, ce qui améliore encore le parallélisme des faces de l'ouverture usinée.

Il peut être avantageux, dans certains cas, de procéder à une translation de rayon r avec le régime d'ébauche, les passes de semi-finition étant faites avec une translation de rayon r' et les passes de finition avec un rayon r", avec $r \lesssim r' \lesssim r''$. D'autre part, si le fait de procéder en trois étapes apparaît comme le plus classique, rien n'empêche, selon les besoins, de n'effectuer que deux étapes (ébauche, puis finition), ou bien un nombre plus élevé d'étapes, avec un rayon r de valeur toujours supérieure à chacune d'entre elles et un régime de plus en plus réduit, pour obtenir une rugosité de plus en plus faible; les différentes valeurs de r sont toujours fonction des régimes et des lignes de passage choisis, sauf dans le cas où l'on utilise la translation circulaire avec un régime d'ébauche identique à celui de la première passe d'ébauche faite sans cette translation circulaire et où la valeur de r ne dépend alors que de l'agrandissement que l'on veut faire subir à l'empreinte obtenue après la première passe d'ébauche. A noter que, si cet agrandissement est prévu dans la gamme de travail, on peut faire la première passe d'ébauche au choix soit dans une position analogue à celle du point P, soit dans une position analogue à celle du point $P_1$.

L'invention sera mieux comprise grâce à la description détaillée d'un mode de réalisation particulier et non limitatif, faite au regard des figures annexées qui représentent respectivement:
- figure 1, une vue en coupe de la pièce avant usinage
- figure 2, une vue en coupe de la pièce et de l'électrode à la fin de la passe d'ébauche
- figure 3, un schéma en perspective montrant les mouvements de l'électrode au cours des opérations
- figure 4, une vue en coupe de la pièce et de l'électrode à la fin des passes de semi-finition
- figure 5, une vue en coupe de la pièce et de l'électrode à la fin des passes de finition
- la figure 6 représente une vue en plan de la section droite d'une électrode de forme quelconque et le profil de l'orifice obtenue par une translation circulaire de rayon r

Sur ces figures, les usures et les valeurs de r ont été représentées de manière fortement exagérées, dans le but d'une meilleure clarté des dessins.

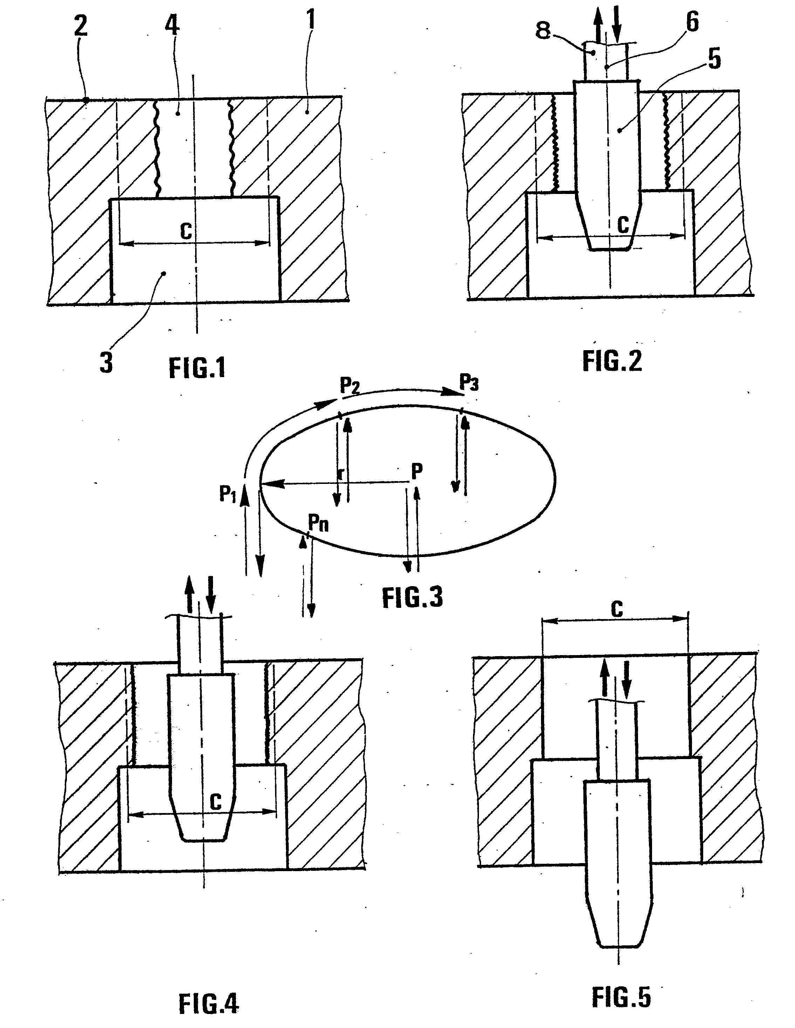

On a représenté figure 1 une plaque métallique (1) destinée à la fabrication d'une filière d'extrusion comportant une face plane (2) dans laquelle on veut réaliser, par électro-érosion, un orifice de largeur C dont les faces sont parallèles et perpendiculaires au plan de base (2) qui constituera la portée de la filière et débouchant sur une ouverture plus large (3), préalablement usinée qui constitue la dépouille de la filière. Quand cela est possible, il est préférable d'usiner préalablement, par des moyens mécaniques classiques, un avant-trou (4) grossier ayant la forme générale du profil à usiner (7).

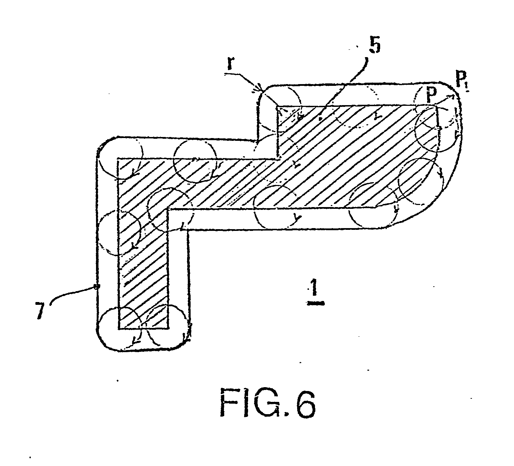

On réalise ensuite un premier étincelage d'ébauche (voir les figures 2 et 6) pour lequel l'électrode (5) est centrée dans l'axe de l'orifice à usiner ou axe d'avance principal (6).

L'électrode descend alors le long de l'axe (6) jusqu'à ce que son extrémité inférieure pénètre dans la dépouille (3), d'une valeur légèrement supérieure à la hauteur de la zone présentant une usure. Cette première passe se fait aussi rapidement que possible, en choisissant un régime utilisant toute la puissance permise par la machine ou, le plus souvent, toute la puissance autorisée par la finesse de l'électrode ou de certains détails. On remonte ensuite l'électrode hors de la pièce et on opère une translation perpendiculaire à l'axe (6) telle qu'un point P situé à la périphérie de l'électrode (5) se trouve en $P_1$, sur le profil (7) à une distance r (voir figure 3). On entame alors la semi-finition qui va se faire avec un régime moyen. L'électrode descend parallèlement à l'axe (6) à un niveau plus bas que pour la passe d'ébauche, de manière qu'elle puisse travailler avec une partie nouvelle, et, après une remontée hors de la pièce, on opère une translation circulaire de cette électrode de telle sorte que le point $P_1$ se retrouve en $P_2$ sur le cercle de centre P et de rayon r, situé dans un plan perpendiculaire à l'axe (6). On répète, ensuite, l'opération n fois de manière à décrire, par arcs de cercle successifs, tout le cercle de centre P et de rayon r. Les arcs $P_1 P_2$, $P_2 P_3$;... $P_{n-1} Pn$, peuvent être aussi petits que l'on veut. A titre d'exemple, n peut être de l'ordre de 20 pour la semi-finition. Le temps de remontée de l'électrode en vitesse rapide étant insignifiant devant le temps de travail en descente, on arrive à un rendement de 75 à 95% par rapport à la méthode qui consisterait à enlever la même quantité de matière en une seule et une unique descente (par exemple avec une électrode présentant, par rapport à celle qu'on utilise dans le procédé, une surépaisseur égale à la valeur r sur toutes ses faces latérales (voir figure 6).

Pour les passes de finition (figure 5), on opère de la même manière, mais avec un régime plus faible et avec un rayon r' légèrement plus grand que r, de manière à tenir compte de la différence entre les lignes de passage choisies et entre les régimes utilisés. Il est préférable d'utiliser des translations avec des arcs un peu plus courts, le nombre de passes étant, par exemple, de l'ordre du double de n. Avec n' de l'ordre 40, on obtient des portées qui ne présentent aucune marque de discontinuité vu la petitesse des rayons utilisés, et qui ont une précision géométrique de l'ordre du centième de millimètre. Par ailleurs, il est avantageux de choisir n et n' pour avoir des pas suffisamment petits entre chaque passe, de façon à réduire les risques de court-circuits et à régulariser l'enlèvement de matière, la valeur de ces pas étant en relation avec la distance électrode-pièce du régime d'étincelage choisi.

De plus, la translation circulaire peut être remplacée par une translation suivant une courbe fermée convexe quelconque (ellipse, polygone, ou autre).

Pour une meilleure compréhention, la description détaillée du procédé a été volontairement faite seulement dans le cas de la tête d'alésage ou de translation circulaire, permettant de communiquer les mouvements de translation circulaire à l'électrode dans un plan perpendiculaire á l'axe (6). Dans le cas du plateau porte-pièce à mouvement orbital, les mouvements de translation circulaire de l'électrode sont remplacés par ceux de la pièce à étinceler, mais le principe du procédé et les résultats obtenus sont exactement les mêmes. Il en est d'ailleurs de même pour tout autre système permettant de communiquer un déplacement latéral contrôlé à l'électrode ou à la pièce à usiner.

La rugosité moyenne obtenue peut être aussi faible que celle dont est capable la machine d'étincelage usilisée, à condition d'avoir une rugosité des faces latérales de l'électrode elle-même suffisamment faible, mais on peut choisir des réglages évitant d'aboutir à des temps d'exécution prohibitifs et permettant, par exemple, d'obtenir une rugosité moyenne de 2 μm CLA. Ces résultats sont obtenus grâce à une optimisation des régimes et des lignes de passage utilisés pour l'électro-érosion, qui permettent de déterminer le sous-dimensionnement de l'électrode par rapport à l'empreinte à obtenir et les valeurs de r et r'. Dans le choix des régimes rentre aussi le préoccupation de limiter le plus possible l'usure de l'électrode.

On remarque que l'électrode descend, au cours de la finition, encore plus profondément que pour la semi-finition et même jusqu'à sortir complètement sous l'orifice étincelé (ceci étant à faire chaque fois que possible) de sorte que le travail de l'électrode ne s'arrête pas au niveau des zones de ses faces latérales usées par les opérations précédentes ou en cours, mais se poursuit et se termine au-delà de ces zones. La zone basse de l'électrode correspond à la partie usée de l'étincelage de l'ébauche, la zone suivante, à la partie usée lors de la semi-finition, la zone suivante, à la partie usée faiblement lors de la finition et la zone supérieure, à une partie encore intacte de l'électrode. Le fait de prendre les précautions ci-dessus permet de faire toute la finition avec la partie supérieure des faces latérales de l'électrode, partie qui, en fin de finition, peut être restée encore partiellement neuve si l'électrode a été prévue assez haute ou sinon, tout au moins, reste toujours plus épaisse (moins usée) que les zones plus basses, et, en fait, très proche de ses dimensions d'origine et donc, d'obtenir une excellente perpendicularité et un excellent parallélisme des faces de l'orifice érodé. Cette méthode suppose que l'électrode a été réalisée avec des faces latérales parfaitement parallèles et, bien entendu, perpendiculaires aux plans parallèles comprenant ses faces inférieure et supérieure, qu'elle a été montée sur la broche de la machine dans une position parfaitement perpendiculaire à la table (ou, si l'on préfère, parallèle au déplacement de la broche) et qu'elle est fixée par une suspension (8) dont les épaisseurs en tous points sont plus faibles que celles correspondantes de l'électrode afin de pouvoir pénétrer sans dommage dans l'orifice déjà étincelé, cette fixation étant réalisable dans la plupart des cas. Les caractéristiques géométriques ci-dessus sont, en général, bien conservées sur une électrode ayant déjà servi car la méthode utilisée (traversée complète de l'électrode dans l'orifice et avance par petits pas) conduit à une usure en finition qui est modérée, régulièrement répartie dans le plan horizontal et d'une façon bien parallèle dans le sens de la hauteur, ce qui permet de réutiliser l'électrode de 2 à 15 fois selon les cas, avec une bonne fidélité quant à la géométrie obtenue et une faible dispersion des diverses dimensions des orifices réalisés. Ce sont, d'ailleurs, ces critères de répartition de l'usure ou de non déformation de l'électrode, qui conduisent ou non à prononcer sa réforme.

Le parallélisme et la perpendicularité des portées sont encore améliorées par l'utilisation, au cours de la finition, d'une circulation du liquide diélectrique par aspiration. Cette méthode est délicate d'emploi car elle produit des gaz qui sont difficiles à évacuer par les moyens classiques. Ceux-ci s'accumulent dans les dégagements ou dépouilles et ont tendance à provoquer de petites explosions suffisantes pour déplacer la pièce ou l'électrode de quelques centièmes de mm, ce qui détruit immédiatement la précision du travail en cours. On peut remédier à cet inconvénient en incorporant dans le cycle de travail, avec une période réglable, une phase de dégazage par retrait vers le haut de l'électrode, ce qui suffit à écarter les risques d'explosion.

Dans ces conditions, la perpendicularité des faces de l'orifice par rapport au plan de base de la pièce, et, par conséquent le parallélisme de ces faces entre elles, sont obtenus avec une précision comparable à celle du déplacement de la broche de la machine. Pour de nombreuses machines, la perpendicularité de ce déplacement par rapport à la table étant respectée avec un écart inférieur à 0,02 mm/m, on peut obtenir, sur la filière étincelée, une conicité tout à fait négligeable à l'échelle des longueurs maximales de portée habituelles, de l'ordre de 20 à 30 mm.

Ces très bonnes tolérances de perpendicularité permettent de pratiquer l'étincelage d'une empreinte débouchante dans un sens indifférent par rapport aux deux faces sur lesquelles elle s'ouvre. En ce qui concerne plus particulièrement les filières d'extrusion des métaux, on choisit le sens d'étincelage permettant les conditions de travail les plus confortables. Pour les filières pour profilés pleins, ce sens est le plus souvent celui représenté sur les figures annexées, c'est-à-dire, en fait, le sens de passage du métal dans la filière, mais rien n'empêche, en cas de besoin, d'utiliser l'autre sens, c'est-à-dire en faisant entrer l'électrode par le côté dégagement. C'est cette possibilité qui est, en fait, utilisée pour les filières pour profilés tubulaires dites «à pont», étincelées alors que l'ensemble est complètement monté puisque, dans ce cas, le seul accès possible pour l'électrode est dans le sens inverse du sens de passage du métal dans l'outillage. L'électro-érosion en sens inverse du sens de filage permet, en outre, à l'endroit qui convient le mieux de la gamme d'usinage de la filière, d'incorporer l'étincelage de la dépouille avec la même électrode, au lieu de réaliser cette partie préalablement par des moyens d'usinage classiques. Dans ces conditions, l'orifice complet, portées et dépouille, peut être réalisé par étincelage, soit directement dans la masse, soit à partir d'un avant trou grossier. L'étincelage de la dépouille peut se faire avec un régime d'ébauche aussi rapide que le permettent la machine ou l'électrode, car cette partie de la filière ne nécessite pas le même précision que les portées, mais on peut, si on le désire, ajouter une étape de semi-finition. La dépouille peut être réalisée avec une génératrice verticale et rectiligne mais, si l'on désire l'ouvrir plus largement sur la sortie de la filière, on peut la réaliser d'une façon étagée. Dans un cas comme dans l'autre, il suffit de choisir des valeurs de r en fonction de l'agrandissement que représente la dépouille à obtenir par rapport à la dimension d'empreinte que peut donner l'électrode.

La précision des dimensions de l'orifice peut être de l'ordre du centième de millimètre, même avec une électrode ayant servi plusieurs fois et présentant une certaine usure répondant aux critères exposés plus haut. En effet, pour corriger l'effet de cette usure, il suffit d'utiliser des rayons r et r' augmentés de la valeur de l'usure latérale et l'on obtient un orifice dont les dimensions sont pratiquement identiques à celles du premier orifice réalisé par l'électrode. Cette possibilité est très importante pour respecter les tolérances serrées des orifices ou de certaines parties de ceux-ci (recherche d'un bon centrage), et aussi pour les outillages à multi-écoulements où les différentes ouvertures peuvent être obtenues avec une très faible dispersion de leurs dimensions, ce qui est prépondérant pour un bon fonctionnement de la filière.

Il est nécessaire de souligner, cependant, que la précision des dimensions de l'orifice obtenu, ne peut être que relative à celle des dimensions de l'électrode et que, au même titre que ce qui a été dit pour le parallélisme de ses faces latérales et pour sa mise en place, il convient d'apporter tout le soin nécessaire à la réalisation des dimensions de cette pièce.

Il est à remarquer que le travail en pas à pas et les retraits éventuels de l'électrode pour dégazage, favorisent un bon lavage de l'intervalle électrode-pièce par le diélectrique.

Le procédé selon l'invention, du fait de la qualité de surface et de la finesse du grain obtenu, permet de travailler sur des outillages traités thermiquement. Si le traitement thermique a été fait en bain de sels, la présence de résidus de sels sur le trajet de l'électrode a pour résultat de perturber gravement le déroulement de l'étincelage. Celui-ci se produit plus là où il y a du sel, mais la machine continue sa descente si bien que l'électrode vient au contact de ce dernier et se déplace ou se déforme en continuant son travail par ailleurs sur une trajectoire aberrante, de sorte que la pièce devient irrécupérable. Il faut donc procéder à un nettoyage poussé des pièces après traitement thermique ou réaliser celui-ci sous atmosphère neutre ou sous vide.

Le procédé selon l'invention peut être mis en œuvre en utilisant une tête d'alésage ou de translation connue, ou bien un plateau porte-pièce à mouvement orbital existant sur le marché, ou encore tout autre système, chacun d'eux comportant un ensemble moteur transmettant soit à l'électrode, soit à la pièce à étinceler, un mouvement de translation circulaire, ou tout autre déplacement latéral contrôlé ces dispositifs étant adaptables sur les machines classiques d'électro-érosion, sous réserve de contraintes dimensionnelles pouvant éventuellement se présenter pour les plus petites.

Le découpage du mouvement du système de translation circulaire en pas élémentaires réglables et leur combinaison avec les mouvements de la broche de la machine, de façon à obtenir un automatisme assurant le cycle de fonctionnement, sa répétition permettant d'effectuer un tour complet de la translation, l'arrêt de la machine à la fin de ce tour, et comportant la possibilité de faire intervenir éventuellement une séquence de dégazage à fréquence réglable, selon les méthodes du procédé ci-dessus, sont très faciles à réaliser par des moyens classiques. L'enchaînement entre les phases ébauche et semi-finition d'une part, puis semi-finition et finition d'autre part, restent bien entendu du domaine de la commande manuelle, de façon à laisser à l'opérateur le choix des réglages nécessaires.

**Revendications**

1. Procédé d'usinage par électro-érosion d'une pièce (1) en vue d'obtenir un orifice cylindrique de section quelconque au moyen d'une électrode unique (5) en déplacement par rapport à la pièce et de section droite analogue à celle de l'orifice mais de dimensions légèrement plus faibles, caractérisé en ce que:

– on réalise une première passe d'ébauche rapide, par descente de l'électrode parallèlement aux génératrices de l'orifice à obtenir et remontée, hors de la pièce à usiner (1), l'orifice ayant un profil (7)

– on opère une translation de l'électrode perpendiculairement aux génératrices d'une distance r de sorte qu'un point P limitant l'électrode (5) arrive en $P_1$ sur le profil (7)

– on fait descendre l'électrode (5) dans l'orifice ébauché parallèlement aux génératrices et on la remonte hors de la pièce à usiner (1)

– on opère une translation circulaire de l'électrode de sorte que $P_1$ décrive un arc de cercle de centre P et de rayon r

– on fait descendre l'électrode parallèlement aux génératrices et on la remonte hors de la pièce à usiner (1)

– on répète l'opération n fois jusqu'à ce que la translation ait fait un tour complet, n étant supérieur ou égal à 1.

2. Procédé selon la revendication 1, caractérisé en ce que la descente de l'électrode (5) après translation se fait à régime identique ou plus faible que celui de la passe d'ébauche.

3. Procédé selon l'une des revendications 1 et 2, caractérisé en ce qu'il comporte au moins une étape de semi-finition avec n passes d'étincelage et une translation circulaire de rayon r et au moins une étape de finition à régime plus faible avec n' passes d'étincelage et une translation circulaire de rayon r', n' et r' étant respectivement supérieurs à n et r.

4. Procédé selon la revendication 3, caractérisé en ce que l'électrode (5) descend plus profondément dans l'orifice au cours des étapes successives d'ébauche, de semi-finition et de finition.

5. Procédé selon la revendication 4, caractérisé en ce que l'électrode (5) sort complètement sous l'orifice étincelé.

6. Procédé selon la revendication 5, caractérisé en ce que le dispositif de suspension (8) de l'électrode (5) a une section plus faible que celle de l'électrode, de manière à pénétrer dans l'orifice étincelé.

7. Procédé selon l'une quelconque des revendications 1 à 6, caractérisé en ce que la translation circulaire entre $P_1$ et $P_2$...$P_{n-1}$ et $P_n$ est remplacée par une translation selon un trajet quelconque fermé convexe.

8. Procédé selon l'une quelconque des revendications 1 à 7, caractérisé en ce que c'est la pièce à usiner (1) qui subit un mouvement de translation latérale alors que l'électrode (5) ne se déplace que longitudinalement suivant son axe (6).

9. Procédé selon l'une quelconque des revendications 1 à 8, caractérisé en ce qu'une circulation de liquide diélectrique se fait par aspiration au cours de la finition.

10. Procédé selon la revendication 9, caractérisé en ce qu'il comporte, au cours de la finition, une phase de dégazage à périodicité réglable par retrait vers le haut de l'électrode (5).

11. Procédé selon l'une quelconque des revendications 1 à 10, caractérisé en ce qu'il est pratiqué sur des pièces (1) ayant subi un traitement thermique préalable.

12. Application du procédé selon l'une quelconque des revendications 1 à 11 à l'usinage des portées et des dépouilles des filières d'extrusion des métaux.

13. Procédé de fabrication de filières d'extrusion de produits tubulaires selon l'une quelconque des revendications 1 à 12, comportant une pièce formant l'extérieur de l'orifice annulaire et une pièce formant le noyau intérieur, caractérisé en ce que les deux pièces sont assemblées de manière précise et complète avant usinage.

14. Procédé selon l'une quelconque des revendications 12 et 13, caractérisé en ce qu'on réalise avec la même électrode (5) plusieurs orifices rigoureusement identiques en augmentant les valeurs de r de la valeur de l'usure des faces latérales de l'électrode (5) après l'usinage de l'orifice précédent.

## Claims

1. A process for the spark erosion machining of a workpiece (1) in order to obtain a cylindrical orifice of any cross-section by means of a single electrode (5) travelling relative to the workpiece and having a straight section similar to that of the orifice but of slightly smaller dimensions, characterised in that:

a first rapid rough pass is performed by the descent of the electrode parallel to the generatrices of the orifice to be obtained and raising of it, outside the workpiece to be machined, the orifice having a profile (7);

the electrode is translated perpendicularly to the generatrices by a distance r so that a point P defining the electrode (5) arrives at $P_1$ on the profile (7);

the electrode (5) is lowered into the rough orifice parallel to the generatrices and is raised outside the workpiece to be machined (1);

the electrode is translated circularly so that $P_1$ describes an arc of a circle of centre P and radius r;

the electrode is lowered parallel to the generatrices and is raised outside the workpiece to be machined (1);

the operation is repeated n times until the translation has made a complete revolution, n being greater than or equal to (1).

2. A process according to claim 1, characterised in that the descent of the electrode (5) after translation takes place at an identical speed or slower speed than that of the rough pass.

3. A process according to one of claims 1 and 2, characterised in that it comprises at least one semi-finishing stage with n spark erosion passes and circular translation of radius r and at least one finishing stage at a lower speed with n' spark erosion passes and a circular translation of radius r', n' and r' being greater than n and r, respectively.

4. A process according to claim 3, characterised in that the electrode (5) descends deeper into the orifice during the successive stages of rough-shaping, semi-finishing and finishing.

5. A process according to claim 4, characterised in that the electrode (5) issues completely beneath the spark eroded orifice.

6. A process according to claim 5, characterised in that the suspension device (8) of the electrode (5) has a smaller section than that of the electrode so that it penetrates into the spark eroded orifice.

7. A process according to any one of claims 1 to 6, characterised in that the circular translation between $P_1$ and $P_2...P_{n-1}$ and $P_n$ is replaced by translation along any convex closed path.

8. A process according to any one of claims 1 to 7, characterised in that the workpiece (1) to be machined is subjected to a movement of lateral translation whereas the electrode (5) only moves longitudinally along its axis (6).

9. A process according to any one of claims 1 to 8, characterised in that the dielectric liquid is circulated by suction during the finishing operation.

10. A process according to claim 9, characterised in that it comprises, during the finishing operation, a degassing phase of adjustable periodicity by withdrawal toward the top of the electrode (5).

11. A process according to any one of claims 1 to 10, characterised in that it is carried out on workpieces which have been subjected to a preliminary thermal treatment.

12. Application of the process according to any one of claims 1 to 11 to the machining of the bores and the clearances of dies for the extrusion of metals.

13. A process for the production of dies for the extrusion of tubular products according to any one of claims 1 to 12, comprising a part forming the exterior of the annular orifice and a part forming the internal core, characterised in that the two parts are assembled in a precise and complete manner before the machining operation.

14. A process according to any one of claims 12 and 13, characterised in that several strictly identical orifices are made with the same electrode (5) by increasing the values of r by the value of the wear of the lateral faces of the electrode (5) after the preceding orifice is machined.

## Patentansprüche

1. Elektroerosions-Bearbeitungsverfahren für ein Teil (1), um eine zylindrische Öffnung beliebigen Querschnitts mittels einer einzigen Elektrode (5) durch Verschieben gegenüber dem Teil, die einen Querschnitt besitzt, der analog dem der Öffnung, jedoch etwas kleiner ist, dadurch gekennzeichnet,

dass man einen ersten Schnell-Vorarbeitsgang durch Absenken der Elektrode parallel zu den Erzeugenden der zu erreichenden Öffnung und durch Wiederanheben nach ausserhalb des zu bearbeitenden Teils (1) durchführt, wobei die Öffnung ein Profil (7) besitzt,
dass man eine Translationsbewegung der Elektrode senkrecht zu den Erzeugenden um einen Abstand r derart durchführt, dass ein die Elektrode (5) begrenzender Punkt P bzw. $P_1$ am Profil (7) ankommt,
dass man die Elektrode in der vorgearbeiteten Öffnung parallel zu den Erzeugenden absenkt und sie wieder nach ausserhalb des zu bearbeitenden Teils (1) anhebt,
dass man eine bogenförmige Translationsbewegung der Elektrode derart durchführt, dass $P_1$ einen Kreisbogen mit Mitte P und Radius r beschreibt, dass man die Elektrode parallel zu den Erzeugenden absenkt und sie wieder nach ausserhalb des zu bearbeitenden Teils (1) anhebt, dass man den Vorgang n-mal durchführt, bis die Translationsbewegung einen vollständigen Umlauf vollendet hat, mit $n \geq 1$.

2. Verfahren nach Anspruch 1, dadurch gekennzeichnet, dass das Absenken der Elektrode (5) nach der Translationsbewegung unter den gleichen oder schwächeren Bedingungen erfolgt, wie bei dem Vorarbeitsgang.

3. Verfahren nach einem der Ansprüche 1 und 2, dadurch gekennzeichnet, dass es mindestens einen Halbfertigungs-Abschnitt mit n Erodierungsschritten und einer bogenförmigen Translationsbewegung mit Radius r und mindestens einen Endfertigungsabschnitt unter schwächeren Bedingungen mit n' Erodierungsabschnitten und einer bogenförmigen Translationsbewegung mit Radius r' aufweist, wobei n' und r' jeweils grösser sind als n bzw. r.

4. Verfahren nach Anspruch 3, dadurch gekennzeichnet, dass die Elektrode (5) in der Öffnung während der aufeinanderfolgenden Abschnitte des Vorarbeitsgangs, der Halbfertigung und der Endfertigung tiefer abgesenkt wird.

5. Verfahren nach Anspruch 4, dadurch gekennzeichnet, dass die Elektrode (5) vollständig unter der erodierten Öffnung heraustritt.

6. Verfahren nach Anspruch 5, dadurch gekennzeichnet, dass die Aufhängevorrichtung (8) der Elektrode (5) einen kleineren Querschnitt als die Elektrode (5) für das Einführen in die erodierte Öffnung besitzt.

7. Verfahren nach einem der Ansprüche 1 bis 6, dadurch gekennzeichnet, dass die bogenförmige Translationsbewegung zwischen $P_1$ und $P_2...P_{n-1}$ und $P_n$ durch eine Translationsbewegung beliebigen geschlossenen konvexen Verlaufs ersetzt ist.

8. Verfahren nach einem der Ansprüche 1 bis 7, dadurch gekennzeichnet, dass das zu bearbeitende Teil (1) einer lateralen Translationsbewegung unterliegt, während die Elektrode (5) nur in Längsrichtung gemäss ihrer Achse (6) verschoben wird.

9. Verfahren nach einem der Ansprüche 1 bis 8, dadurch gekennzeichnet, dass die Umwälzung des dielektrischen Fluids durch Saugwirkung während der Endfertigung erfolgt.

10. Verfahren nach Anspruch 9, dadurch gekennzeichnet, dass es während der Endfertigung eine Entgasungsphase einstellbarer Pediodizität durch nach oben Zurückziehen der Elektrode (5) aufweist.

11. Verfahren nach einem der Ansprüche 1 bis 10, dadurch gekennzeichnet, dass es auf Teile (1), die einer Wärmevorbehandlung unterlegen sind, angewendet wird.

12. Anwendung des Verfahrens nach einem der Ansprüche 1 bis 11 auf die Bearbeitung von Trageinrichtungen und Abstreifeinrichtungen von Metall-Extrudermundstücken.

13. Verfahren zur Herstellung von Extrudermundstücken von rohrförmigen Produkten nach einem der Ansprüche 1 bis 12 mit einem Teil, das das Äussere der Ringöffnung bildet, und mit einem Teil, das den inneren Kern bildet, dadurch gekennzeichnet, dass die beiden Teile genau und vollständig vor der Bearbeitung zusammengebaut werden.

14. Verfahren nach einem der Ansprüche 12 und 13, dadurch gekennzeichnet, dass man mit der gleichen Elektrode (5) mehrere genau gleiche Öffnungen durch Vergrössern der Werte von r um den Abnutzungswert der Seitenflächen der Elektrode (5) nach Bearbeitung der vorhergehenden Öffnung erreicht.

FIG.1

FIG.2

FIG.3

FIG.4

FIG.5

FIG.6